# EUROPÄISCHE PATENTSCHRIFT

(11) **EP 1 332 539 B1**
(45) Veröffentlichungstag und Bekanntmachung des Hinweises auf die Patenterteilung: **07.04.2004**
(21) Anmeldenummer: 01960043.6
(22) Anmeldetag: 31.08.2001
(51) Int. Cl.: H02J 7/00

(54) **BATTERIELADEVORRICHTUNG UND VERFAHREN ZUM LADEN VON BATTERIEN MIT MEHREREN BATTERIEBLÖCKEN**
BATTERY CHARGING DEVICE AND METHOD FOR THE CHARGING OF BATTERIES WITH SEVERAL BATTERY BLOCKS
DISPOSITIF CHARGEUR DE BATTERIES ET PROCEDE PERMETTANT DE CHARGER DES BATTERIES A PLUSIEURS BLOCS DE BATTERIES

(30) Priorität: 09.11.2000 CH 218500
(43) Veröffentlichungstag der Anmeldung: 06.08.2003
(73) Patentinhaber: Berner Fachhochschule Hochsschule für Technik und Architektur Biel-Bienne, 2501 Biel-Bienne (CH)
(72) Erfinder: MEIER-ENGEL, Karl, CH-3512 Walkringen (CH)
(74) Vertreter: BOVARD AG - Patentanwälte
(86) Internationale Anmeldenummer: PCT/CH2001/000527
(87) Internationale Veröffentlichungsnummer: WO 2002/039563

(56) Entgegenhaltungen:
- WO-A-98/04025
- US-A- 5 438 250
- US-A- 5 498 950
- US-A- 5 610 495

## Beschreibung

Die vorliegende Erfindung betrifft eine Batterieladevorrichtung sowie ein Verfahren zum Laden von Batterien mittels eines Stromversorgungsmoduls, wobei eine Batterie mehrere in Serie geschaltete Batterieblöcke umfasst. Die Erfindung betrifft insbesondere Verfahren und Systeme zum Laden von Batterien für Elektromobile u.Ä.

Wiederaufladbare Batterien und entsprechende Vorrichtungen zum Wiederaufladen von solchen Batterien sind seit vielen Jahren bekannt und Stand der Technik. Obwohl die heute erhältlichen Batterien und Vorrichtungen zum Laden der Batterien noch weit davon entfernt sind, allen Anforderungen der Technik gerecht zu werden, findet sich eine breite Palette von Anwendungen in vielen Bereichen der Technik. Dazu gehören nicht nur Exoten wie die Weltraumtechnik und Sonnenenergietechnik. In praktisch allen mobilen Vorrichtungen oder auch in Einrichtungen, die z.B. ohne menschliche Überwachung längere Zeit funktionieren müssen, bilden wiederaufladbare Batterien das Rückgrat zur Zwischenspeicherung elektrischer Energie. Ein typisches Anwendungsgebiet dabei sind solarenergiebetriebene Messvorrichtungen oder andere Vorrichtungen zur Datenakquisition, Elektromobile, Mobilfunkgeräte etc. etc. Wiederaufladbare Batterien müssen, wie der Name sagt, periodisch geladen werden. Zum Laden werden die Batterien im Normalfall zwischenzeitlich an das öffentliche Stromnetz angeschlossen, über eine Solaranlage mittels Solarzellen oder über einen mit einem Kraftstoff, wie fossile Brennstoffe, betriebenen Generator geladen.

Ein spezielles Einsatzgebiet wiederaufladbarer Batterien sind sog. Elektromobile, d.h. Automobile mit elektrischem Antrieb. Der enorme Erfolg des Automobils im zwanzigsten Jahrhundert hat zu einer unglaublichen Flut von Automobilen auf den Strassen geführt. Dies hatte zwangsläufig zur Folge, dass die negativen Aspekte von Kraftfahrzeugen mit Verbrennmotoren auf Basis fossiler Rohstoffe zu schwer lösbaren Problemen wurden. Dazu gehört insbesondere der Schadstoffausstoss wie CO, CO₂, etc., aber auch das Knapperwerden der natürlichen Resourcen solcher Rohstoffe. Es darf gesagt werden, dass der Ausstoss von "Treibhausgasen", wie das erwähnte CO₂, von den Wissenschaftlern heute als eine der grössten Bedrohungen für das weitere Bestehen menschlicher Existenz auf der Erde angesehen wird. Klimakatastrophen und Ungleichgewichte im Wasserhaushalt der Weltmeere sind nur zwei der möglichen Horrorszenarien. Trotzdem scheint kaum jemand bereit zu sein, die im letzten Jahrhundert erreichte Mobilität aufzugeben. Es muss deshalb zu den primären Zielen der wissenschaftlichen Forschung gehören, Wege aus dem Dilemma und der sich anbahnenden Katastrophe zu finden. Elektromobile und andere Fahrzeuge basierend auf elektrischem Antrieb könnten bei der Lösung der angeführten Probleme in naher Zukunft eine wichtige Rolle spielen.

Um die Elektromotoren der Elektromobile antreiben zu können, sind sie im Normalfall mit Batterien zur Zwischenspeicherung benötigter elektrischer Energie ausgerüstet. Die Performance oder Leistung von solchen Elektromobilen wird stark durch die Eigenschaften der Batterie und deren optimalem Batteriemanagement bestimmt. Wichtige Parameter dabei sind u.a. Kosten und Gewicht der Batterien, Anzahl möglicher Zyklen des Wiederaufladens, Aufladegeschwindigkeit, Einfachheit der Handhabung, Entsorgbarkeit etc.. Experimente mit verschiedenen Batterien zeigen, dass Bleiakkumulatoren (lead-acid) generell eine tiefere Energiedichte und eine kürzere Lebenszeit aufweisen, als z.B. Nickel-Cadmium- oder Nickel-Metallhybrid Akkumulatoren, wie Nickel-Eisen-Batterien. Leider sind die Batterien mit einer höheren Energiedichte und mehr Lebenszyklen auch signifikant teurer. Für Geräte mit kleinem Stromverbrauch, wie Mobilfunkgeräte etc. fällt der Kostenfaktor der Batterie nicht so stark ins Gewicht. Bei Vorrichtungen mit grossem Strombedarf, wie Elektromobile bekommt der Kostenfaktor der Batterien eine ganz andere Grössenordnung. Deshalb kann in diesen Gebieten der Preis der Batterien eine entscheidende Rolle spielen. Eine der damit verbundenen Fragen ist, ob die Lebenszyklen der Batterien mittels besserem Batteriemanagement, insbesondere der Ladetechnik, verbessert werden kann.

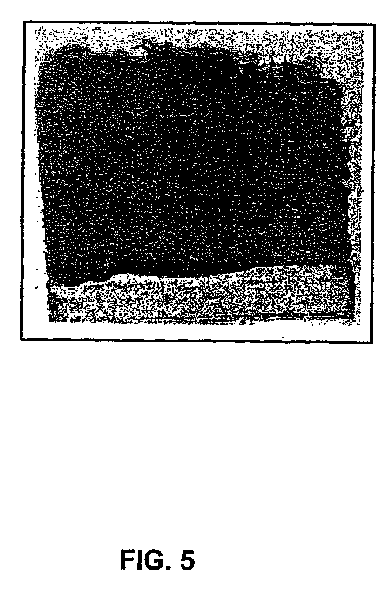

Für Vorrichtungen mit grossem Strombedarf werden u.a. Batterien mit in Serie geschalteten einzelnen Batteriezellen eingesetzt. Im Stand der Technik finden sich bei solchen Serieschaltungen von Akkumulatorbatterien Ladegeräte, welche den gesamten Batteriestrang bestehend aus den verschiedenen Batterieblöcken über eine Gesamtspannung aufladen. Die Spannung des Ladegerätes entspricht dabei der Ladespannung des Batteriestrangs. Bei solchen Ladeverfahren ist es aber schwierig, die einzelnen Zellspannungen und Ladeströme zu beherrschen. Dies hat u.a. bei vorzeitigem Ladungsabbruch den Nachteil, dass die Batteriezellen unterschiedliche Ladungszustände besitzen. Bei der Benutzung von Elektromobilen ist es aber häufig gerade wünschenswert, dass ein Benutzer zu einem beliebigen Augenblick des Ladevorganges das Laden der Batterien unterbrechen kann. Ein weiterer Nachteil ist, dass bei solchen Ladesystemen die Spannungen der einzelnen Zellen so hohe Werte erreichen kann, dass eine erhöhte Produktion an Wasserstoff und Sauerstoff auftritt. Dies führt vor allem bei wartungsfreien Batterien zu einem Verlust an Wasser. Die Folge ist eine Korrosion des oberen Teils des Bleigitters (vgl. Figur 5). Dieser Effekt führt zu einem vorzeitigen Ausfall, d.h. zu einer verkürzten Lebensdauer der Zelle. Zusätzlich ist es bei den Ladeverfahren des Standes der Technik schwierig, die sog. "end-of-charge"-Bedingung optimal zu bestimmen, ohne dass es dabei zu einer Überladung von einzelnen Batterieblöcken kommt. Ein solches Over-Charge kann bei bestimmten Arten von wiederaufladbaren Batterien zu ernsthaften Schäden führen und ebenfalls ihre Lebensdauer signifikant verkürzen. In der wissenschaftlichen Literatur (siehe z.B. Paviov D., Petkova G., Dimitrov M., Shiomi M. und Tsubota M.: Influence of fast charge on the life cycle of positive lead-acid battery plates; Journal of Power Sources 87 2000 p. 39-56) ist schon seit Jahren bekannt, dass bei gewissen Batterien die Lebensdauer im Zyklenbetrieb durch Verwendung hoher Ladeströme verbessert wird. Dies konnte mit unseren Experimenten auf dem Prüfstand der HTA Biel (Hochschule für Technik und Architektur Biel-Bienne) bestätigt werden (siehe dazu Meier-Engel Karl: VEBILA, Verbesserung der Lebensdauer von Batterien mit einem intelligenten Ladegerät; Jahresbericht 2000 HTA Biel-Bienne; Abteilung Automobiltechnik). Der Vorteil, dass zum Laden hohe Ladeströme verwendet werden, kann aber u.a. auch deswegen häufig nicht genutzt werden, da die Kosten der Ladegeräte mit zunehmender Leistung stark ansteigen.

Die internationale Patentveröffentlichung WO 98/04025 der Firma Curtis Instruments, INC. offenbart ein Verfahren zum Laden von Batterien mit mehreren Baterieblöcken, mit dem Ziel, eine Lösung zu den oben angeführten Nachteilen aufzuzeigen. Dabei werden beim Laden der Batterie die einzelnen Batterieblöcke sequentiell nacheinander geladen und höhere Ladeströme verwendet (high rate charging), als bei den konventionellen Ladeverfahren verwendet werden. Das Verfahren offenbart jedoch nicht, wie bei den hohen Strömen die Spannung am einzelnen Batterieblock beherscht werden kann. Gerade dies ist jedoch entscheident für eine lange Lebensdauer der Batterien und somit u.a. dafür, das ein solches Verfahren erfolgreich angewendet werden kann. Hohe, unkontrollierte Spannungswerte bzw. Ladungszustände führen, wie erwähnt, zu einer erhöhten Produktion an Wasserstoff und Sauerstoff. Dies führt vor allem bei wartungsfreien Batterien zu einem Verlust an Wasser und einer Zersetzung des Elektrolyten. Die Folge ist eine stark erhöhte Gitterkorrosion. Dieser Effekt führt zu einem vorzeitigen Ausfall, d.h. zu einer verkürzten Lebensdauer der Zelle.

Es ist eine Aufgabe dieser Erfindung, ein neues Verfahren und System zum Laden von Batterien mit mehreren Batterieblöcken vorzuschlagen, welches die oben beschriebenen Nachteile nicht aufweist, Insbesondere sollen die End-Of-Charge Bedingungen genauer bestimmt werden können, höhere Ladeströme verwendet werden können, die Ladezyklen verkürzt werden können und der Ladevorgang jederzeit unterbrochen werden können, ohne dass die einzelnen Batteriezellen des Akkumulators stark unterschiedliche Ladungszustände aufweisen. Gleichzeitig sollen durch die Erfindung auch die Kosten für eine solche Batterieladevorrichtung in einem erschwinglichen Rahmen gehalten werden.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass Batterien mit mehreren Batterieblöcken bzw. Batteriezellen mittels eines Stromversorgungsmoduls geladen werden, wobei in einer I-Phase bis zum Erreichen einer vordefinierten Spannung und/oder Temperatur die einzelnen Batterieblöcke einer Batterie einmal pro Ladezyklus seriell nacheinander während einer bestimmbaren Zeitdauer bei konstantem Ladestrom und variabler Spannung geladen werden, wobei in einer U-Phase nach Erreichen der vordefinierten Spannung und/oder Temperatur die einzelnen Batterieblöcke der Batterie einmal pro Ladezyklus seriell nacheinander während einer bestimmbaren Zeitdauer bei konstanter Spannung und variablem Strom geladen werden, und wobei die Ladezyklen so viele Male wiederholt werden, bis die einzelnen Batterieblöcke einen definierbaren Ladezustand und/oder Temperatur erreicht haben oder die Stromversorgung über das Stromversorgungsmodul unterbrochen wird. Diese Ausführungsvariante hat u.a. den Vorteil, dass zum Laden der Batterie höhere Ladeströme als im Stand der Technik verwendet werden können. Dabei lassen sich zudem die End-Of-Charge Bedingungen genauer bestimmen. Ein anderer Vorteil ist, dass sich der Ladezyklus auch bei tieferen Ladeströmen verkürzt. Sollte das Laden der Batterie vorzeitig unterbrochen werden, kann durch das mehrfache serielle Laden garantiert werden, dass die einzelnen Batterieblöcke einen maximalen vorbestimmbaren Ladungsunterschied nicht überschreiten, d.h. die Batterieblöcke befinden sich auch bei einem vorzeitigen Abbruch des Ladens in nahezu dem gleichen Ladezustand, was weitere Vorteile zur Folge hat. Weitere Vorteile sind u.a., dass das Stromversorgungsmodul nur für einen Batterieblock ausgelegt sein muss. Damit können die Kosten zur Herstellung des Stromversorgungsmoduls reduziert werden. Da jeder Batterieblock individuell aufgeladen wird, kann wie gesagt die Spannung und die Temperatur des einzelnen Batterieblocks exakt überwacht und eingehalten werden. Während den Pausen in einem Ladezyklus können die Batterieblöcke abkühlen. Die obenerwähnten Eigenschaften und Vorteile haben als weiterer Vorteil eine grössere Ladezyklenzahl und eine längere Lebensdauer der Batterien zur Folge.

In einer Ausführungsvariante erfolgt das Umschalten von einem Batterieblock auf den nächsten automatisch während eines Ladezyklus mittels eines Umschalters. Das Umschalten kann z.B. elektronisch und/oder elektromechanisch gesteuert erfolgen. Diese Ausführungsvariante hat u.a. den Vorteil, dass das Laden ohne Zutun eines Benutzers erfolgen kann.

In einer weiteren Ausführungsvariante erfolgt das Laden eines einzelnen Batterieblocks pro Ladezyklus während einer Zeitdauer von 30-300 Sekunden. Dies hat u.a. dem Vorteil, dass bei einem vorzeitigen Abbruch des Ladens die Batterieblöcke keine zu grossen Ladungsunterschiede tragen. Zudem kann in dieser Zeitdauer das Verhältnis von Ladestromstärke und Erhitzung der Batterie optimiert werden. So kann ein Batterieblock beim Laden der anderen Batterieblöcke z.B. genügend kühlen, so dass keine Schäden in den Batterieblöcken durch Überhitzung auftreten. Diese Überhitzung der Batterien bzw. Batterieblöcke beim Laden mit konventionellen Methoden ist eines der Hauptprobleme des Standes der Technik.

In einer anderen Ausführungsvariante entspricht ein jeweiliges Laden eines einzelnen Batterieblocks pro Ladezyklus einer Kapazität von 1/240 bis 1/12 der Gesamtkapazität. Diese Ausführungsvariante hat u.a. die gleichen Vorteile wie die vorhergehende Ausführungsvariante.

In einer Ausführungsvariante wird pro Batterieblock der Ladestrom mittels zweier elektronischer Schalter ein- und ausgeschaltet. Die elektronischen Schalter können z.B. ein oder mehrere MOS-FET-Transistoren umfassen. Diese Ausführungsvariante hat u.a. den Vorteil, dass es sich bei den MOS-FET Transistoren um eine kostengünstige Realisierung des elektronischen Schalters handelt, bei welchem auf dem Markt erhältliche Standardkomponenten der Technik verwendet werden.

In einer weiteren Ausführungsvariante steuert zum Laden von Batterien eine Steuervorrichtung mit einem Mikroprozessor die elektronischen Schalter und/oder Funktionen des Stromversorgungsmoduls. Die Steuervorrichtung kann als Variante mit einem Mikroprozessor mindestens Spannung und/oder Temperatur des Batterieblocks messen, welcher gerade geladen wird, und basierend auf den gemessenen Daten den Ladezyklus steuert. Weiter kann die Steuervorrichtung mit dem Mikroprozessor so programmiert sein, dass der Ladezyklus beim Erreichen einer vordefinierbaren Ladekennlinie abbricht. Diese Ausführungsvariante hat u.a. den Vorteil, dass sich das Laden der Batterien für den Benutzer automatisch und kontrollierbar steuern lässt.

An dieser Stelle soll festgehalten werden, dass sich die vorliegende Erfindung neben dem erfindungsgemässen Verfahren auch auf ein System zur Ausführung dieses Verfahrens bezieht. Ferner beschränkt es sich nicht auf wiederaufladbare Batterien von Elektromobilen, sondern ganz allgemein auf Batterien mit mehreren in Serie geschalteten Batterieblöcken.

Nachfolgend werden Ausführungsvarianten der vorliegenden Erfindung anhand von Beispielen beschrieben. Die Beispiele der Ausführungen werden durch folgende beigelegte Figuren illustriert:
Figur 1 zeigt ein Blockdiagramm, welches schematisch die Architektur einer Ausführungsvariante einer erfindungsgemässen Batterieladevorrichtung zum Laden von Batterien 30 mit mehreren Batterieblöcken 31, 32, 33, ..., 3n zeigt.
Figur 2 zeigt ebenfalls ein Blockdiagramm, welches schematisch die Architektur einer Ausführungsvariante einer erfindungsgemässen Batterieladevorrichtung zum Laden von Batterien 30 mit mehreren Batterieblöcken 31, 32, 33, ..., 3n detaillierter als in Figur 1 zeigt.
Figur 3 zeigt ein Messdiagramm, welches schematisch den Spannungsverlauf der einzelnen Batterieblöcke während des Ladens zeigt. In der I-Phase wird zum Laden ein konstanter Strom verwendet Während dieser Ladephase können die Batterieblöcke wie in diesem Diagramm unterschiedliche Spannungen aufweisen.
Figur 4 zeigt ein Messdiagramm, welches schematisch den Spannungsverlauf der einzelnen Batterieblöcke während des Ladens zeigt. In der U-Phase wird die Spannung auf einen festen Wert eingestellt. Während dieser Ladephase können die Batterieblöcke wie in diesem Diagramm unterschiedliche Ströme aufweisen.
Figur 5 zeigt die positive Elektrode einer Testbatterie nach einem Lebenszyklustest. Die positive Elektrode zeigt eine starke Korrosion des Gitters im oberen Teil, weiche offensichtlich durch Wasserverlust verstärkt wurde.

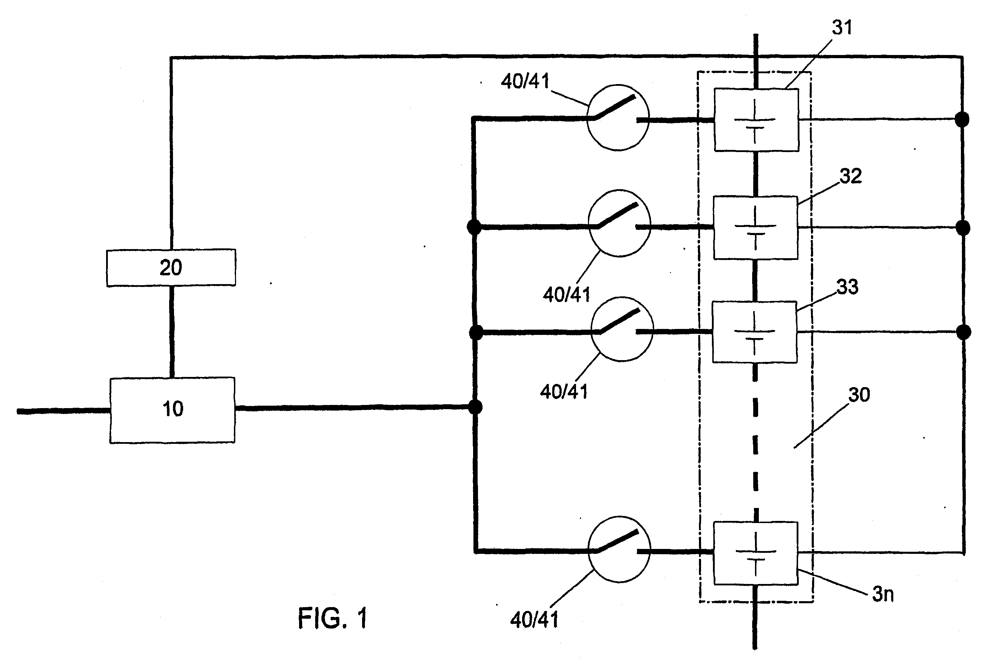

Figur 1 illustriert eine Architektur, die zur Realisierung der Erfindung verwendet werden kann. In diesem Ausführungsbeispiel umfasst die Batterieladevorrichtung zum Laden von Batterien ein Stromversorgungsmodul 10, wobei eine Batterie 30 jeweils mehrere in Serie geschaltete Batterieblöcke 31, 32, 33,..., 3n umfasst. Bei den Batterien 30 kann es sich z.B. um Bleiakkumulatoren (lead-acid), Nickel-Cadmium-Akkumulatoren, Nickel-Metallhybrid Akkumulatoren, wie Nickel-Eisen-Batterien, Batterien aus Brennstoffzellen wie z.B. Solid Oxid Fuel Cell (SOFC), Proton Exchange Membrane Fuel Cell (PEM-FC) oder Direct Methanol Fuel Cell (DMFC), Superkondensatoren (Supercaps) und/oder Ultrakondesatoren (Ultracaps) handeln. Für mobile Anwendungen, wie beispielsweise Kraftfahrzeuge bzw Elektromobile, die Batterien basierend auf Brennstoffzellen benutzen, eignen sich besonders Brennstoffzellentypen mit vergleichsweise niedriger Betriebstemperatur wie PEM-FC. Die erfindungsgemässe Batterieladevorrichtung bezieht sich aber ganz allgemein auf wiederaufladbare Batterien, die aus mehreren, miteinander verbundenen Batteriezellen bzw. Batterieblöcken bestehen. Die einzelnen Batterieblöcke 31, 32, 33,..., 3n einer Batterie 30 werden einmal pro Ladezyklus seriell nacheinander während einer bestimmbaren Zeitdauer mittels Umschalter 40/41 geladen und die Ladezyklen werden so viele Male wiederholt wird, bis die einzelnen Batterieblöcke 31, 32, 33,..., 3n einen definierbaren Ladezustand erreicht haben oder die Stromversorgung über das Stromversorgungsmodul 10 unterbrochen wird. Mit einem definierbaren Ladezustand ist nicht gemeint, dass das Laden nicht vorzeitig unterbrochen werden kann. Im Gegenteil soll damit angenommen werden, dass im Fall einer vorzeitigen Unterbrechung des Ladens der Ladezustand der Batterie 30 einfach anders bestimmt worden ist. Bei der Batterieladevorrichtung kann die Umschaltung automatisch und/oder elektronisch und/oder elektromechanisch gesteuert erfolgen. Das Ein- und Ausschalten des Ladestroms pro Batterieblock bzw. Batteriezelle kann mittels zweier elektronischer Schalter 40/41 realisiert sein. Die elektronischen Schalter 40/41 können z.B. mindestens einen MOS-FET-Transistor umfassen. Eine solche Ausführungsvariante hat dabei den Vorteil, dass MOS-FET Transistoren relativ kostengünstige Standartkomponenten sind, die deshalb auch einfach erhältlich sind. Einem Batterieblock 31, 32, 33,..., 3n kann pro Ladezyklus beispielsweise während einer Zeitdauer von 30 - 300 Sekunden und/oder mit einer Kapazität von 1/240 bis 1/12 der Gesamtkapazität pro Ladezyklus Ladestrom zugeführt werden. In einem hier beschriebenen Ausführungsbeispiel umfasst die Batterie 30 z.B. Batteriezellen 31, 32, 33,..., 3n mit jeweils 12V. Der Ladestrom betrug beispielsweise 0.5 C oder mehr und die Ladezeit war wie beschrieben 30 - 300 Sekunden. Der Ladestrom kann über das Stromversorgungsmodul 10 zugeführt werden, welches z.B. mit dem öffentlichen Stromnetz und/oder Solarzellen und/oder einem Stromgenerator auf Basis fossiler Brennstoffe etc. verbunden ist. Je nach Stromzuführung kann das Stromversorgungsmodul 10 eine AC/DC-Wandler umfassen. Der Ladevorgang wird z.B. so lange weitergeführt, bis die Verbindung zum öffentlichen Stromnetz unterbrochen wird oder die Batterien voll aufgeladen sind. Das elektronische und/oder elektromechanisch gesteuerte Umschalten kann mittels einer Steuervorrichtung 20 erfolgen, wobei die Steuervorrichtung 20 ein oder mehrere Mikroprozessoren und/oder Speichermodule umfassen kann. Die Steuervorrichtung 20 steuert und kontrolliert die elektronischen Schalter 40/41 und/oder die Funktionen des Stromversorgungsmoduls 10. So kann z.B. mittels der Steuervorrichtung 20 der Ladezyklus unterbrochen werden, wenn eine definierbare Ladekennlinie erreicht wird. In einer Ausführungsvariante überwacht die Steuervorrichtung insbesondere z.B. periodisch die Ladeparameter, wie z.B. Spannung und Temperatur der einzelnen Batterieblöcke und/oder der Batterie. Die Spannungsreglung kann vorzugsweise in Abhängigkeit der Batterietemperatur erfolgen. Zur elektrischen Verbindungen zwischen Stromversorgungsmodul 10, Steuervorrichtung 20 und Umschalter 40/41 können z.B. Flachbandkabel und/oder Einzelkabel verwendet werden. Zur Übertragung von Messsignalen kann ein Datenbus das Steuergerät 20 mit den entsprechenden Messvorrichtungen verbinden.

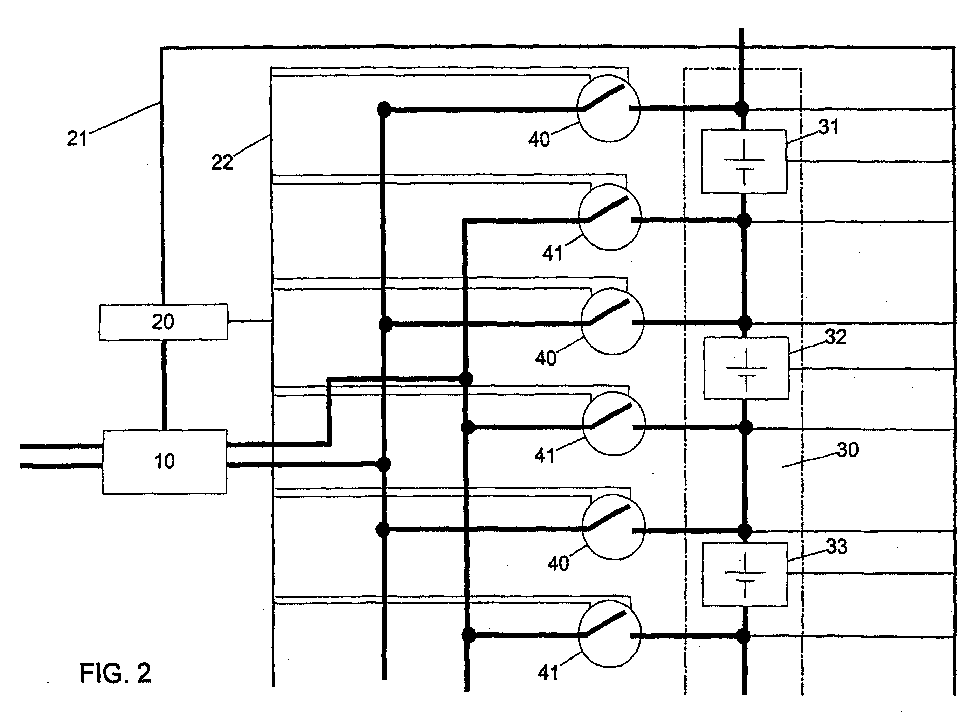

Figur 2 illustriert eine Architektur, die zur Realisierung der Erfindung verwendet werden kann. Dieses Ausführungsbeispiel umfasst die gleichen Merkmale wie das Ausführungsbeispiel aus Figur 1. Die Beschreibung von Figur 1 inklusive der Referenznummern gilt identisch auch für Figur 2, wobei Figur 2 eine detailliertere Darstellung eines Ausführungsbeispiels zeigt. Insbesondere sind die elektrischen Verbindungen zwischen Stromversorgungsmodul 10, Steuervorrichtung 20 und Umschalter 40/41 spezifisch aufgezeigt, ohne dass jedoch damit die Allgemeinheit der Batterieladevorrichtung oder des Verfahrens zum Laden von Batterien in irgendeiner Weise eingeschränkt werden soll. Wie beschrieben können die elektrischen Verbindungen z.B. mit Flachbandkabel und/oder Einzelkabel realisiert werden. Zur Übertragung von Messsignalen und/oder der Steuersignale kann ein Datenbus das Steuergerät 20 mit den entsprechenden Messvorrichtungen bzw. Umschalter 40/41 verbinden. In Figur 2 gibt die Referenznummer 21 die Messleitungen, d.h. die Verbindung von der Steuereinheit 20 zu den Messvorrichtungen an, womit die Signale zum Messen der Spannung und/oder der Temperatur und/oder weiteren Ladezustandsparameter zur Steuereinheit 20 übertragen werden können. Die Ladezustandsparameter werden direkt bei den einzelnen Batterieblöcken 31, 32, 33,..., 3n der zu ladenden Batterie 30 gemessen. Referenznummer 22 stellt die Steuerleitungen dar, d.h. die Verbindungen zum Übertragen der Steuerbefehle zum Umschalten der Schalter 40/41. In Figur 2 sind die Umschalter 40/41 jetzt separat dargestellt, wobei die Referenznummem 40 beispielsweise elektronische Schalter, wie z.B. MOS-FET-Transistoren, zum Unterbrechen des positiven Anschlusses sind, während die Referenznummern 41 beispielsweise elektronische Schalter, wie z.B. MOS-FET Transistoren, zum Unterbrechen des negativen Anschlusses sind. Das Stromversorgungsmodul 10, wie es in Figur 1 und 2 dargestellt ist, kann mit handelsüblichen Bauteilen, z.B. der Firma VICOR (vgl. VICOR Product User Guide (2000), http://www.vicr.com), hergestellt werden. Eine mögliche Realisierung wäre z.B., mit einem VI-ARM-C12 Input-Modul (In: 90 bis 264Vac bei 750W max. Temperaturbereich: -25°C bis 85°C) zusammen mit einem VI-261-CU-BM DC-DC Converter (In: 300Vdc, Out: 12Vdc bei 200W, Temperaturbereich: -25°C bis 85°C) und einem VI-B61-CU-BM Boostermodul (In: 300Vdc, Out: 12Vdc bei 150W, Temperaturbereich: -25°C bis 85°C) zu erreichen. Es ist jedoch darauf hinzuweisen, dass solche Stromversorgungsmodule 10 zum Stand der Technik gehören, ebenso wie die Herstellung der Stromversorgungsmodule 10 für den Fachmann auf dem Gebiet sowohl in dieser als auch in irgend einer anderen Ausführung bekannt ist. Diese angeführten VICOR-Bauelemente können beispielsweise in einem Kühlkörper aufgebaut und mit einem Gehäuse gegen die Berührung durch Personen gesichert werden. Bei geeigneter Konstruktionsweise sollte das Stromversorgungsmodul 10 aber auch ohne Kühlung, z.B. durch einen Kühlventilator, auskommen. Die Ausgangsspannung des Stromversorgungsmoduls 10 kann z.B. von der elektronischen Steuervorrichtung 20 überwacht werden und über die Eingangsspannung Vᵢₙ geregelt werden. Der Ladestrom kann über den Eingangsstrom Iᵢₙ gesteuert werden. In diesem Ausführungsbeispiel umfasst die Steuervorrichtung 20 vier Module: Ein Modul zur Messung der Temperatur und der Spannung der einzelnen Batterieblöcke mit optional einer 230V Erkennung (weiter unten beschrieben), einen Mikroprozessor, ein Ausgangsmodul und ein Treibermodul. Die Module können z.B. in einem Metallgehäuse untergebracht sein, wobei die Verbindung mit Flachbandkabeln erfolgen kann. In einem anderen Ausführungsbeispiel kann die Verbindung z.B. auch über ein Bus-System erfolgen. Die Temperaturmessungen an den Batterieblöcken 31, 32, 33,..., 3n können zum Beispiel mittels Temperatursensoren gemacht werden. Eine Möglichkeit aus dem Stand der Technik wäre hierzu die Verwendung eines Temperatursensors KTY-10 der Firma Siemens. Dieser wird in diesem Ausführungsbeispiel direkt mit der Spannungsquelle des Mikroprozessors gespiesen, was den Vorteil hat, dass der Messwert direkt dem Mikroprozessor zugeführt werden kann. Mittels eines Potentiometers kann die Temperatur entsprechend kalibriert werden. Auf die gleiche Art ist es möglich, an weiteren Batterieblöcken 31, 32, 33,..., 3n die Temperatur zu messen. Die Spannungsmessung der einzelnen Batterieblöcke 31, 32, 33,..., 3n kann mit Printrelais durchgeführt werden. Diese werden vom Mikroprozessor eingeschaltet, sobald der entsprechende Batterieblock 31, 32, 33,..., 3n geladen wird. Die Speisung der Printrelais kann z.B. mit 12 V erfolgen. Falls die Batterie 30 in einem Elektromobil zum Einsatz kommt, kann dazu beispielsweise die Bordspannung des Elektromobils verwendet werden. Die Ansteuerung eines oder mehrerer Mikroprozessoren kann über Optokoppler und/oder Transistoren geschehen, wobei eine elektronische Verriegelung verhindert, dass zwei Printrelais gleichzeitig geschaltet werden. In dem Ausführungsbeispiel werden die Messwerte über einen Trennverstärker dem mindestens einen Mikroprozessor zugeführt. Vor dem Trennverstärker wird die Spannung des Batterieblocks auf einen Faktor 0.294 der Spannung reduziert. Somit entspricht beim Mikroprozessor eine Spannung von 5 V einer Spannung von 17 V bei den Batterieblöcken 31, 32, 33,..., 3n. Z.B. mittels Potentiometer kann die Spannung kalibiriert werden. In diesem Ausführungsbeispiel versorgt ein DC/DC-Wandler den Trennverstärkereingang mit Spannung. Der Ausgang des Trennverstärkers wird vom DC/DC-Wandler des Mikroprozessors mit Spannung versorgt. Die erwähnte 230V-Erkennung kann dazu benutzt werden, festzustellen, ob die Batterieladevorrichtung, welche sich z.B. in einem Elektromobil befindet, an eine Stromversorgung wie das öffentliche Stromnetz angeschlossen ist oder nicht. Mit einem Optokoppler HP HCPL3700 kann der Wechselstrom gleichgerichtet werden und digitale Signale für den Mikroprozessor erzeugt werden.

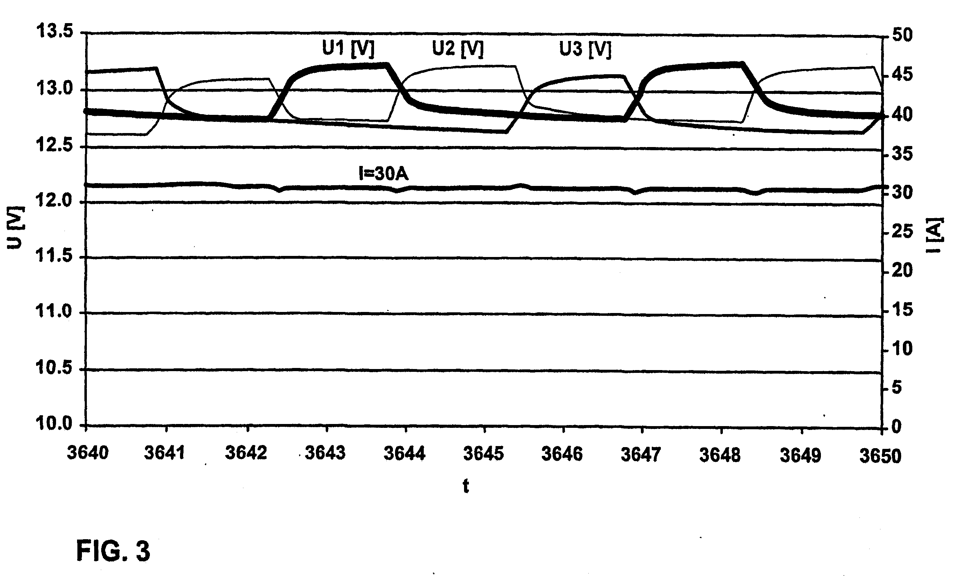

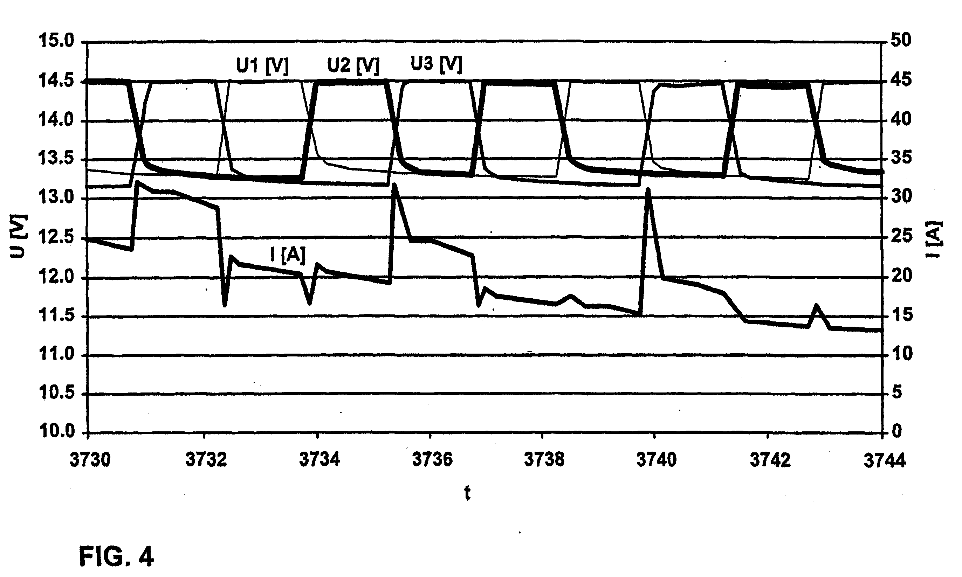

Der Mikroprozessor ist üblicherweise auf einem Board oder einer Leiterplatte installiert. Die Speisung kann über einen DC/DC-Wandler und einen 5V-Regler erfolgen. Für die Programmierung des Mikroprozessors kann eine der üblichen Programmiersprachen verwendet werden. Bei einer elektronischen Steuerung der Umschaltung von einem Batterieblock auf den nächsten wird das Umschalten durch den Mikroprozessor gesteuert. Die Ladezeit eines Batterieblocks beträgt bei diesem Ausführungsbeispiel vorzugsweise 30-300 Sekunden. Aber auch andere Zeiten sind prinzipiell vorstellbar. Vorzugsweise sollte bei dem Prozess das Verhältnis der Höhe des Ladestroms und der Erhitzung des Batterieblocks zusammen mit den Abkühlphasen während dem Aufladen der anderen Batterieblöcke optimiert werden. Über einen analogen Ausgang kann die beschriebene Spannung Vᵢₙ des Stromversorgungsmoduls 10 erzeugt werden. Die Lade-Endspannung kann z.B. über ein Potentiometer kalibriert werden. Die Steuerung des Ausgangsstroms wurde bei diesem Ausführungsbeispiel mittels zweier Digitalausgänge realisiert. Damit lassen sich zwei unterschiedliche Ströme steuern, beispielsweise während der I-Phase. Im vorliegenden Ausführungsbeispiel wurde für den Ladevorgang zwischen I-Phase und U-Phase unterschieden. Während der I-Phase wird jeder Batterieblock mit einem konstanten Strom, z.B. 30 A, der aber mindestens 0.5 C beträgt aufgeladen. Während dieser Phase können die Batterieblöcke, wie in Figur 3 für das Laden von einer Batterie mit 3 Batterieblöcken dargestellt, unterschiedliche Spannungen aufweisen. Die Zeitachse t gibt in Figur 3 die Zeit in Minuteneinheiten an. Während der U-Phase wird dagegen mit einer konstanten Spannung geladen. Dabei können nun die Batterieblöcke unterschiedliche Ströme aufweisen. Die U-Phase ist in Figur 4 für ebenfalls eine Batterie mit drei Batterieblöcken dargestellt. Die Zeitachse t in Figur 4 gibt wiederum die Zeit in Minuteneinheiten an. Im abgebildeten Diagramm ist beispielsweise der Ladestrom des dritten Batterieblocks deutlich höher als diese der Batterieblöcke 1 und 2.

Das hier beschriebene Ausführungsbeispiel hat durch diese Architektur den Vorteil, dass zum Laden der Batterie höhere Ladeströme als im Stand der Technik verwendet werden können. Dabei lassen sich auch die End-Of-Charge-Bedingungen genauer bestimmen. Ein anderer Vorteil ist, dass sich der Ladezyklus auch bei tieferen Ladeströmen verkürzt. Sollte das Laden der Batterie vorzeitig unterbrochen werden, kann durch das mehrfache serielle Laden garantiert werden, dass die einzelnen Batterieblöcke einen maximalen vorbestimmbaren Ladungsunterschied nicht überschreiten, d.h. die Batterieblöcke befinden sich auch bei einem vorzeitigen Abbruch des Ladens in nahezu dem gleichen Ladezustand. Ebenso hat das Ausführungsbeispiel den Vorteil, dass das Stromversorgungsmodul nur für einen Batterieblock ausgelegt sein muss. Damit können die Kosten zur Herstellung des Stromversorgungsmoduls reduziert werden. Da jeder Batterieblock individuell aufgeladen wird, kann die Spannung und die Temperatur des einzelnen Batterieblocks exakt überwacht und eingehalten werden. Während den Pausen in einem Ladezyklus können die Batterieblöcke abkühlen. Die oben erwähnten Eigenschaften und Vorteile haben als weiteren Vorteil eine grössere Anzahl Ladezyklen und eine längere Lebensdauer der Batterien zur Folge. Die Nachteile des Standes des Technik, wie ein Überhitzen der Batterien und tiefere Ladeströme, können somit vermieden werden. Figur 5 zeigt das Bild einer durch die Ladezyklen beschädigten positiven Elektrode einer Testbatterie (HAWKER GENESIS 37 Ah) nach dem Laden mit einer konventionellen Lademethode, wobei der Ladestrom über der ganzen Batterie angelegt wurde. Die positive Elektrode der Testbatterie zeigt eine starke Korrosion im oberen Teil des Gitters. Der Mikrofaserglas-Separator dieser unterhaltsfreien Batterie ist verhältnismässig trocken, woraus sich schliessen lässt, dass die oben genannten Nachteile des Standes der Technik zu einem erhöhten Wasserverlust geführt haben, was die Korrosion der Batterie beschleunigt hatte.

Im vorliegenden Ausführungsbeispiel werden die Ausgangssignale des Mikroprozessors mit einer Potentialtrennung an das Treibermodul weitergegeben. Für Elektromobile kann beispielsweise die Steuerung des Fahrzeugantriebs ausgeschaltet werden, sobald die Batterieladevorrichtung arbeitet, indem ein dafür vorgesehenes Relais geschlossen wird. Auf diese Weise kann sichergestellt werden, dass der Fahrer nicht mit dem Fahrzeug wegfährt, während das Elektromobil noch mittels Ladestecker an das öffentliche Stromnetz angeschlossen ist. Zum Anzeigen des Endes des Ladeprozesses kann z.B. ein NPN-Kleintransistor verwendet werden. Dieser wird leitend, sobald das Laden beendet ist und erzeugt damit ein externes Signal. Es kann je nach Ausführungsbeispiel sinnvoll sein, verschiedene Betriebszustände der Batterieladevorrichtung anzuzeigen. Beispiele von solchen Betriebszuständen sind: Batterieladevorrichtung ist in Betrieb, Alarmtemperatur (Batterie bzw. Batterieblock ist zu warm), Ladezyklus oder Ladeprozess ist beendet. Der maximale Wert des Ladestroms kann z.B. mittels eines Relais über Iᵢₙ eingestellt werden. Dazu kann auch ein zweiter Ladestrom mittels eines Potentiometers gesteuert werden, falls ein solcher zweiter Ladestrom bei einer Ausführungsform notwendig ist. So könnte allenfalls eine zweite I-Phase erzeugt werden. Die Printrelais zum Einschalten des Batterieblocks können beispielsweise in das Treibermodul integriert sein. Dabei kann für jeden Batterieblock je ein Relais zur Steuerung der Umschaltung 40 am positiven Pol und ein Relais zur Steuerung der Umschaltung 41 am negativen Pol verwendet werden. Die dazu benötigte Steuerspannung für den positiven und den negativen Pol kann z.B. durch einen DC/DC-Wandler erzeugt werden.

Für die elektronischen Umschalter 40/41 werden in diesem Ausführungsbeispiel FET-MOS-FET-Transistoren verwendet. Dies hat u.a. den Vorteil, dass es sich bei den MOS-FET-Transistoren um eine kostengünstige Realisierung der elektronischen Schalter handelt, indem auf dem Markt erhältliche Standardkomponenten der Technik verwendet werden. Andere Realisierungen der Umschalter 40/41 sind aber vorstellbar. So kann z.B. an Stelle der MOS-FET-Transistoren auch irgend ein anderer Halbleiter oder ein Relais verwendet werden, um das Umschalten des Ladestroms zu bewerkstelligen. Da MOS-FET-Transistoren eine Inversdiode besitzen, muss ihre Wirkung mit einer Diode unterbrochen werden, da sonst die Potentialtrennung der einzelnen Batterieblöcke nicht gewährleistet werden könnte. Für das Ausführungsbeispiel wurden Temp-FET-Transistoren verwendet, die bei Übertemperatur automatisch abgeschaltet werden. Damit kann ein Überhitzen eines Transistors kein Ausfall des Transistors verursachen. Die Übertragung der Steuersignale kann z.B. über Kabel oder einen Datenbus geschehen.

Es ist wichtig darauf hinzuweisen, dass die Anzahl der Batterieblöcke bzw. Batteriezellen pro Batterie durch die erfindungsgemässe Vorrichtung zum Laden von solchen Batterien nicht begrenzt wird. Dabei ist es vorstellbar, dass bei einer grossen Anzahl von Batterieblöcken mehrere Ladegeräte nebeneinander eingesetzt werden. Das erfindungsgemässe Verfahren und die erfindungsgemässe Vorrichtung ist damit beliebig erweiterbar, skalierbar und individuell an die gegebenen Bedürfnisse anpassbar. Dieser Vorteil kann so im Stand der Technik nicht gefunden werden. Es soll hier ebenfalls festgehalten werden, dass trotz der detaillierten Beschreibung des Ausführungsbeispiels, der durch die Beschreibung und die Ansprüche offenbarte Gegenstand der Erfindung durch die angegebenen technischen Details in keiner Weise als eingeschränkt zu betrachten ist. Im Gegenteil, der erfindungsgemässe Gegenstand bezieht sich ganz allgemein auf Batterieladevorrichtungen und Verfahren zum Laden von Batterien, welche Batterien ein oder mehrere miteinander verbundene Batterieblöcke oder Batteriezellen umfassen.

## Patentansprüche

1. Verfahren zum Laden von Batterien mittels eines Stromversorgungsmoduls (10), wobei eine Batterie (30) mehrere in Serie geschaltete Batterieblöcke (31, 32, 33,..., 3n) umfasst,
wobei in einer I-Phase bis zum Erreichen einer vordefinierten Spannung und/oder Temperatur die einzelnen Batterieblöcke (31, 32, 33,..., 3n) der Batterie (30) einmal pro Ladezyklus seriell nacheinander während einer bestimmbaren Zeitdauer bei konstantem Ladestrom und variabler Spannung geladen werden,
wobei die Ladezyklen so viele Male wiederholt werden, bis die einzelnen Batterieblöcke (31, 32, 33,..., 3n) einen definierbaren Ladezustand und/oder Temperatur erreicht haben oder die Stromversorgung über das Stromversorgungsmodul (10) unterbrochen wird, **dadurch gekennzeichnet,**
**dass** in einer U-Phase nach Erreichen der vordefinierten Spannung und/oder Temperatur die einzelnen Batterieblöcke (31, 32, 33,..., 3n) der Batterie (30) einmal pro Ladezyklus seriell nacheinander während einer bestimmbaren Zeitdauer bei konstanter Spannung und variablem Strom geladen werden.

2. Verfahren zum Laden von Batterien nach Anspruch 1, **dadurch gekennzeichnet, dass** während eines Ladezyklus das Umschalten des Ladens von einem Batterieblock (31, 32, 33,..., 3n) auf den nächsten automatisch erfolgt.

3. Verfahren zum Laden von Batterien nach Anspruch 2, **dadurch gekennzeichnet, dass** während eines Ladezyklus das Umschalten des Ladens von einem Batterieblock (31,32,33,...,3n) auf den nächsten elektronisch erfolgt.

4. Verfahren zum Laden von Batterien nach einem der Ansprüche 1 bis 3, **dadurch gekennzeichnet, dass** das Laden eines einzelnen Batterieblocks (31, 32, 33,..., 3n) pro Ladezyklus während einer Zeitdauer von 30 - 300 Sekunden erfolgt.

5. Verfahren zum Laden von Batterien nach einem der Ansprüche 1 bis 4, **dadurch gekennzeichnet, dass** ein jeweiliges Laden eines einzelnen Batterieblocks (31, 32, 33,..., 3n) pro Ladezyklus einer Kapazität von 1/240 bis 1/12 der Gesamtkapazität entspricht

6. Verfahren zum Laden von Batterien nach einem der Ansprüche 1 bis 5, **dadurch gekennzeichnet, dass** pro Batterieblock (31, 32, 33,..., 3n) der Ladestrom mittels zweier elektronischer Schalter (40/41) ein- und ausgeschaltet wird.

7. Verfahren zum Laden von Batterien nach Anspruch 6, **dadurch gekennzeichnet, dass** die elektronischen Schalter (40/41 ) mindestens einen MOS-FET-Transistor umfassen.

8. Verfahren zum Laden von Batterien nach einem der Ansprüche 6 oder 7, **dadurch gekennzeichnet, dass** eine Steuervorrichtung (20) mit einem Mikroprozessor die elektronischen Schalter (40/41) und/oder Funktionen des Stromversorgungsmoduls (10) steuert.

9. Verfahren zum Laden von Batterien nach einem der Ansprüche 1 bis 9, **dadurch gekennzeichnet, dass** die Steuervorrichtung (20) mit dem Mikroprozessor so programmiert ist, dass der Ladezyklus beim Erreichen einer vordefinierbaren Ladekennlinie abbricht.

10. Batterieladevorrichtung zum Laden von Batterien, welche mehrere in Serie geschaltete Batterieblöcke (31, 32, 33,..., 3n) umfassen, wobei die Batterieladevorrichtung ein Stromversorgungsmodul (10) umfasst,
wobei die Batterieladevorrichtung Mittel umfasst, mittels welchen in einer I-Phase bis zum Erreichen einer vordefinierten Spannung und/oder Temperatur die einzelnen Batterieblöcke (31, 32, 33,..., 3n) der Batterie (30) einmal pro Ladezyklus seriell nacheinander während einer bestimmbaren Zeitdauer bei konstantem Ladestrom und variabler Spannung aufladbar sind,
wobei die Batterieladevorrichtung eine Steuervorrichtung (20) umfasst, mittels welcher so viele Ladezyklen programmierbar sind, bis die einzelnen Batterieblöcke (31, 32, 33,..., 3n) einen definierbaren Ladezustand und/oder Temperatur erreicht haben, **dadurch gekennzeichnet,**
**dass** die Batterieladevorrichtung Mittel umfasst, mittels welchen in einer U-Phase nach Erreichen der vordefinierten Spannung und/oder Temperatur die einzelnen Batterieblöcke (31, 32, 33,..., 3n) der Batterie (30) einmal pro Ladezyklus seriell nacheinander während einer bestimmbaren Zeitdauer bei konstanter Spannung und variablem Strom aufladbar sind.

11. Batterieladevorrichtung nach Anspruch 10, **dadurch gekennzeichnet, dass** die Batterieladevorrichtung eine automatische Umschaltung umfasst, mittels welcher die einzelnen Batterieblöcke (31, 32, 33,..., 3n) der Batterie (30) einmal pro Ladezyklus seriell nacheinander während einer bestimmbaren Zeitdauer auf- und/oder nachladbar sind.

12. Batterieladevorrichtung nach Anspruch 11, **dadurch gekennzeichnet, dass** die Batterieladevorrichtung eine elektronische Umschaltung umfasst, mittels welcher die einzelnen Batterieblöcke (31, 32, 33,..., 3n) einer Batterie (30) einmal pro Ladezyklus seriell nacheinander während einer bestimmbaren Zeitdauer auf- und/oder nachladbar sind.

13. Batterieladevorrichtung nach einem der Ansprüche 10 bis 12, **dadurch gekennzeichnet, dass** das Laden eines einzelnen Batterieblocks (31, 32, 33,..., 3n) pro Ladezyklus eine Ladedauer von 30 - 300 Sekunden umfasst.

14. Batterieladevorrichtung nach einem der Ansprüche 10 bis 13, **dadurch gekennzeichnet, dass** ein jeweiliges Laden eines einzelnen Batterieblocks (31, 32, 33,..., 3n) pro Ladezyklus einer Kapazität von 1/240 bis 1/12 der Gesamtkapazität entspricht.

15. Batterieladevorrichtung nach einem der Ansprüche 10 bis 14, **dadurch gekennzeichnet, dass** pro Batterieblock der Ladestrom mittels zweier elektronischer Schalter (40/41) ein- und ausschaltbar ist.

16. Batterieladevorrichtung nach Anspruch 15, **dadurch gekennzeichnet, dass** die elektronischen Schalter (40/41) mindestens einen MOS-FET-Transistor umfassen.

17. Batterieladevorrichtung nach einem der Ansprüche 15 oder 16, **dadurch gekennzeichnet, dass** die Steuervorrichtung (20) der Batterieladevorrichtung einen Mikroprozessor umfasst, welcher die elektronischen Schalter (40/41) und/oder Funktionen des Stromversorgungsmoduls (10) steuert.

18. Batterieladevorrichtung nach einem der Ansprüche 10 bis 17, **dadurch gekennzeichnet, dass** die Steuervorrichtung (20) mit dem Mikroprozessor so programmierbar ist, dass der Ladezyklus beim Erreichen einer vordefinierbaren Ladekennlinie abbricht.

## Claims

1. Method for charging batteries by means of a power supply module (10), a battery (30) comprising a plurality of battery blocks (31, 32, 33, ..., 3n) connected in series,
in an I-phase until attaining a predefined voltage and/or temperature, the individual battery blocks (31, 32, 33, ..., 3n) of the battery (30) being charged serially one after the other, once per charging cycle, during a definable duration at constant charging current and variable voltage,
the charging cycle being repeated so many times until the individual battery blocks (31, 32, 33, ..., 3n) have reached a definable state of charge and/or temperature or until the power supply via the power supply module (10) is disconnected, **characterised**
**in that** in a U-phase, after attaining the predefined voltage and/or temperature, the individual battery blocks (31, 32, 33, ..., 3n) of the battery (30) are charged serially one after the other, once per charging cycle, during a definable duration at constant voltage and variable current.

2. Method for charging batteries according to claim 1, **characterised in that** during a charging cycle the switching over of the charging from one battery block (31, 32, 33, ..., 3n) to the next takes place automatically.

3. Method for charging batteries according to claim 2, **characterised in that** during a charging cycle the switching over of the charging from one battery block (31, 32, 33, ..., 3n) to the next takes place electronically.

4. Method for charging batteries according to one of the claims 1 to 3, **characterised in that** the charging of an individual battery block (31, 32, 33, ..., 3n) per charging cyde takes place for a period of 30 - 300 seconds.

5. Method for charging batteries according to one of the claims 1 to 4, **characterised in that** each charging of an individual battery block (31, 32, 33, ..., 3n) per charging cycle corresponds to a capacitance of 1/240 to 1/12 of the overall capacitance.

6. Method for charging batteries according to one of the claims 1 to 5, **characterised in that**, per battery block (31, 32, 33, ..., 3n), the charging current is switched on and off by means of two electronic switches (40/41).

7. Method for charging batteries according to claim 6, **characterised in that** the electronic switches (40/41) comprise at least one MOS-FET transistor.

8. Method for charging batteries according to one of the claims 6 or 7, **characterised in that** a control device (20) with a microprocessor controls the electronic switches (40/41) and/or functions of the power supply module (10).

9. Method for charging batteries according to one of the claims 1 to 9 <sic. 8>, **characterised in that** the control device (20) with the microprocessor is programmed such that the charging cycle is ended upon attaining a pre-definable charging characteristic.

10. Battery charging device for charging batteries which comprise a plurality of battery blocks (31, 32, 33, ..., 3n) connected in series, the battery charging device comprising a power supply module (10),
the battery charging device comprising means by which, in an I-phase, until attaining a predefined voltage and/or temperature, the individual battery blocks (31, 32, 33, ..., 3n) of the battery (30) are chargeable, serially one after the other, once per charging cycle, during a definable duration at constant charging current and variable voltage,
the battery charging device comprising a control device (20) by means of which so many charging cycles are programmable until the individual battery blocks (31, 32, 33, ..., 3n) have reached a definable state of charge and/or temperature, **characterised**
**in that** the battery charging device comprises means by which, in a U-phase, after attaining the predefined voltage and/or temperature, the individual battery blocks (31, 32, 33, ..., 3n) of the battery (30) are chargeable, serially one after the other, once per charging cycle, during a definable duration at constant voltage and variable current.

11. Battery charging device according to claim 10, **characterised in that** the battery charging device comprises an automatic changeover switch by means of which the individual battery blocks (31, 32, 33, ..., 3n) of the battery (30) are chargeable and/or rechargeable serially one after the other, once per charging cycle, during a pre-determinable period of time.

12. Battery charging device according to claim 11, **characterised in that** the battery charging device comprises an electronic changeover switch by means of which the individual battery blocks (31, 32, 33, ..., 3n) of the battery (30) are chargeable and/or rechargeable serially one after the other, once per charging cycle, during a pre-determinable period of time.

13. Battery charging device according to one of the claims 10 to 12, **characterised in that** the charging of an individual battery block (31, 32, 33, ..., 3n) per charging cycle comprises a charging duration of 30 - 300 seconds.

14. Battery charging device according to one of the claims 10 to 13, **characterised in that** each charging of an individual battery block (31, 32, 33, .., 3n) per charging cycle corresponds to a capacitance of 1/240 to 1/12 of the overall capacitance.

15. Battery charging device according to one of the claims 11 to 15 <sic. 10 to 14>, **characterised in that** per battery block, the charging current is switchable on and off by means of two electronic switches (40/41).

16. Battery charging device according to claim 16 <sic. 15>, **characterised in that** the electronic switches (40/41) comprise at least one MOS-FET transistor.

17. Battery charging device according to one of the claims 16 or 17 <sic. 15 or 16>, **characterised in that** the control device (20) of the battery charging device comprises a microprocessor which controls the electronic switches (40/41) and/or functions of the power supply module (10).

18. Battery charging device according to one of the claims 11 to 19 <sic. 10 to 17>, **characterised in that** the control device (20) with the microprocessor is programmable such that the charging cycle is ended upon attaining a pre-definable charging characteristic.

## Revendications

1. Procédé pour le chargement de batteries au moyen d'un module d'alimentation de courant (10), une batterie (30) comprenant plusieurs blocs de batteries (31, 32, 33, ....,3n),
dans une phase I, chacun des blocs de batteries (31, 32, 33, ....,3n) de la batterie (30) étant chargé jusqu'a obtention d'une tension et/ou température prédéfinie une fois par cycle de charge en série les uns après les autres pendant une durée de temps déterminable en présence de courant de charge constant et de tension variable,
les cycles de charge étant répétés autant de fois jusqu'à ce que les blocs de batteries (31, 32, 33, ....,3n) aient atteint un état de charge et/ou une température définissable ou que l'alimentation de courant soit interrompue par le module d'alimentation de courant (10), **caractérisé en ce que**
dans une phase U, chacun des blocs de batteries (31, 32, 33, ....,3n) de la batterie (30) est chargé après avoir atteint une tension et/ou une température prédéfinie une fois par cycle de charge en série les uns après les autres pendant une durée de temps déterminable en présence de courant de charge constant et de tension variable.

2. Procédé pour le chargement de batteries selon la revendication 1, **caractérisé en ce que** pendant un cycle de charge, la commutation du chargement d'un bloc de batteries (31, 32, 33, ....,3n) au bloc suivant s'effectue automatiquement.

3. Procédé pour le chargement de batteries selon la revendication 2, **caractérisé en ce que** pendant un cycle de charge, la commutation du chargement d'un bloc de batteries (31, 32, 33, ....,3n) au bloc suivant s'effectue électroniquement.

4. Procédé pour le chargement de batteries selon l'une des revendications 1 à 3, **caractérisé en ce que** le chargement de chacun des blocs de batteries (31, 32, 33, ....,3n) s'effectue par cycle de charge pendant une durée de 30 - 300 secondes.

5. Procédé pour le chargement de batteries selon l'une des revendications 1 à 4, **caractérisé en ce qu'**une charge respective de chacun des blocs de batteries (31, 32, 33, ....,3n) correspond par cycle de chargement à une capacité de 1/240 à 1/12 de l'ensemble de capacité.

6. Procédé pour le chargement de batteries selon l'une des revendications 1 à 5, **caractérisé en ce que** par bloc de batteries (31, 32, 33, ....,3n), le courant de charge est connecté et déconnecté au moyen de deux interrupteurs électroniques (40/41 ).

7. Procédé pour le chargement de batteries selon la revendication 6, **caractérisé en ce que** les interrupteurs électroniques (40/41) comprennent au moins un transistor MOS-FET.

8. Procédé pour le chargement de batteries selon l'une des revendications 6 ou 7, **caractérisé en ce qu'**un dispositif de commande (20) commande à l'aide d'un microprocesseur les interrupteurs électroniques (40/41) et/ou des fonctions du module d'alimentation de courant (10).

9. Procédé pour le chargement de batteries selon l'une des revendications 1 à 2, **caractérisé en ce que** le dispositif de commande (20) est programmé par le microprocesseur de sorte que le cycle de charge est interrompu lorsque une ligne caractéristiques de charge prédéfinissable est atteinte.

10. Dispositif chargeur de batteries pour le chargement de batteries qui comprennent plusieurs blocs de batteries (31, 32, 33, ....,3n), le dispositif de chargement de batterie comprenant un module d'alimentation de courant (10),
le dispositif de chargeur de batteries comprenant des moyens qui permettent que dans une phase I, chacun des blocs de batteries (31, 32, 33, ....,3n) de la batterie (30) peut être chargé jusqu'a obtention d'une tension et/ou température prédéfinie une fois par cycle de charge en série les uns après les autres pendant une durée de temps déterminable en présence de courant de charge constant et de tension variable,
le dispositif chargeur de batteries comprenant un dispositif de commande (20) au moyen duquel de nombreux cycles de charge sont programmables jusqu'à ce que chacun des blocs de batteries (31, 32, 33, ....,3n) ai atteint un état de charge et/ou une température définissable, **caractérisé en ce que**
le dispositif chargeur de batteries comprend des moyens qui permettent que dans une phase U, chacun des blocs de batteries (31, 32, 33, ....,3n) de la batterie (30) peut être chargé après avoir atteint une tension et/ou température prédéfinie une fois par cycle de charge en série les uns après les autres pendant une durée de temps déterminable en présence de courant de charge constant et de tension variable.

11. Dispositif chargeur de batteries selon la revendication 10, **caractérisé en ce que** le dispositif chargeur de batterie comprend une commutation automatique au moyen de laquelle chacun des blocs de batteries (31, 32, 33, ....,3n) de la batterie (30) est chargeable et/ou rechargeable une fois par cycle de charge en série les uns après les autres pendant une durée de temps déterminable.

12. Dispositif chargeur de batteries selon la revendication 11, **caractérisé en ce que** le dispositif chargeur de batteries comprend une commutation électronique au moyen de laquelle chacun des blocs de batteries (31, 32, 33, ....,3n) de la batterie (30) est chargeable et/ou rechargeable une fois par cycle de charge en série les uns après les autres pendant une durée de temps déterminable.

13. Dispositif chargeur de batteries selon l'une des revendications 10 à 12, **caractérisé en ce que** le chargement de chacun des blocs de batteries (31, 32, 33, ....,3n) comprend par cycle de charge une durée de charge de 30 à 300 secondes.

14. Dispositif chargeur de batteries selon l'une des revendications 10 à 13, **caractérisé en ce qu'**une charge respective de chacun des blocs de batteries (31, 32, 33, ...., 3n) correspond par cycle de chargement à une capacité de 1/240 à 1/12 de l'ensemble de capacité.

15. Dispositif chargeur de batteries selon l'une des revendications 11 à 15, **caractérisé en ce que** par bloc de batterie, le courant de charge est connecté et déconnecté au moyen de deux interrupteurs électroniques (40/41).

16. Dispositif chargeur de batteries selon la revendication 16, **caractérisé en ce que** les interrupteurs électroniques (40/41) comprennent au moins un transistor MOS-FET.

17. Dispositif chargeur de batteries selon l'une des revendications 16 ou 17, **caractérisé en ce que** le dispositif de commande (20) du dispositif chargeur de batteries comprend un microprocesseur qui commande les interrupteurs électroniques (40/41) et/ou des fonctions du module d'alimentation de courant (10).

18. Dispositif chargeur de batteries selon l'une des revendications 11 à 19, **caractérisé en ce que** le dispositif de commande (20) est programmable par le microprocesseur de sorte que le cycle de charge est interrompu lorsque une ligne caractéristiques de charge prédéfinissable est atteinte.
